# EUROPÄISCHE PATENTANMELDUNG

(11) **EP 3 225 754 A1**
(43) Veröffentlichungstag der Anmeldung: **04.10.2017**
(21) Anmeldenummer: 16002329.7
(22) Anmeldetag: 02.11.2016
(51) Int. Cl.: E03C 1/126, E03C 1/22, F16B 2/22, E03C 1/262

(54) **TRÄGERFORM FÜR DUFT- UND REINIGUNGSMATERIAL IN ABFLUSSSTOPFEN**

(30) Priorität: 01.04.2016 AT 1682016
(71) Anmelder: Riegler, Manfred, 4715 Taufkirchen (AT)
(72) Erfinder: Riegler, Manfred, 4715 Taufkirchen (AT)
(74) Vertreter: Dupal, Helmut

(57) **Zusammenfassung**

Die Trägerform (3) für Duft- und/oder Reinigungsmaterial (6) in Abflussstopfen umfasst eine kreisförmige Trägerplatte (7) aus Kunststoff, die im eingebauten Zustand ober- oder unterhalb eines Haarfängers auf alle herkömmliche Abflussstopfen, montierbar ist, wobei die Trägerplatte (7) eine Ausnehmung aufweist, auf der eine ca. 15mm hohe und ca. 1mm dicke U-förmige Trägerwand (10) angebracht ist, die auf der Innenseite zur Mitte führende elastische Befestigungsklammern (8) zum Fixieren an den Abflussstopfen aufweist.

## Beschreibung

Die Erfindung betrifft eine Trägerform für Durt-und/oder Reinigungsmaterial in Abflussstopfen mit den Merkmalen des Oberbegriffes des Anspruches 1.

Häufig bilden sich durch Haare und sonstige Rückstände in Abflüssen von Haushalten unhyg-enische und übel- riechende Reste.

Derzeitiger Stand der Technik (FR2837223 A1) ist eine Vorrichtung, die nur mit technischem Mehraufwand ausgetauscht werden kann.

Der Erfindung liegt die Aufgabe zugrunde, die Vorrichtung ohne technischen Mehraufwand auszutauschen ..

Dies wird erfindungsgemäß mit der Lösung der technischen Aufgabe der Erfindung, eine Trägerform für Reinigungsmaterial, die eine einfache Nachbestückung, passend für alle im Handel verfügbaren Abflussstopfen sichert, durch die kennzeichnenden Merkmale des Anspruches 1 erreicht.

Vorteilhafte Ausgestaltungen der Erfindung werden in den Unteransprüchen vorgeschlagen.

Die Erfindung ist verwendbar bei allen Abflussstopfen die mittels Hebelwirkung verschließbar sind oder sich mittels Druckverschluss öffnen oder schließen lassen, wie bei Waschbecken, Duschkabinen, Badewannen.

Trägerform ist eine flache runde Scheibe mit Ausschnitt für die Führung zur Mitte der Scheibe.

In dieser Führung der Trägerform befinden sich jeweils auf einer Seite zur Mitte schauend elastische Klammern, die auf verschiedene Durchmesser eines Abflussstopfens, wahlweise ober- oder unterhalb des Haarfängers steckbar sind.

Für die Befestigung der Trägerform auf einem Abflussstopfen unter oder über dem Haarfänger mit dem darauf angebrachten Duft- und/oder Reinigungsmaterial, ist eine vorherige Demontage des Haarfängers nicht nötig, da es von der Seite mit einem leichten Druck mittels dem eingebauten Klammernsystem von selber hält.

Da die Klammern elastisch sind, passen sie sich an verschiedene Durchmesser der Abflussstutzen an.

Für Druckverschlussstopfen befindet sich eine Sollbruchstelle zwischen Klammern und Trägerwand.

Das Reinigungsmaterial wird im Kaltpressverfahren aufgepresst.
Das Material für die Trägerform ist Kunststoff.

Die Erfindung wird anhand eines Ausführungsbeispiels gemäß den Zeichnungen näher erläutert:

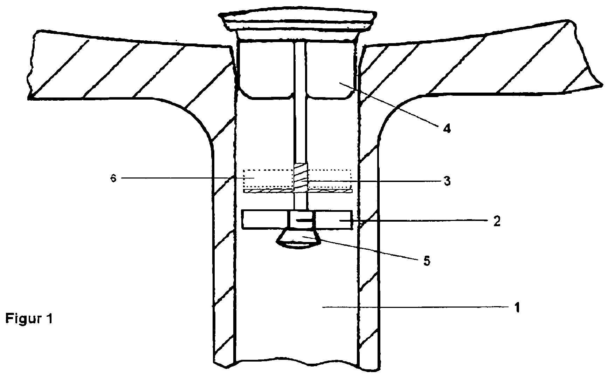

Figur 1 zeigt einen Abflussstopfen 4 mit angebrachter Trägerform 3 und angebrachtem Reinigungsmaterial 6 in einem Abfluss 1 mit Haarfänger 2 und Haarfängerschraube 5.

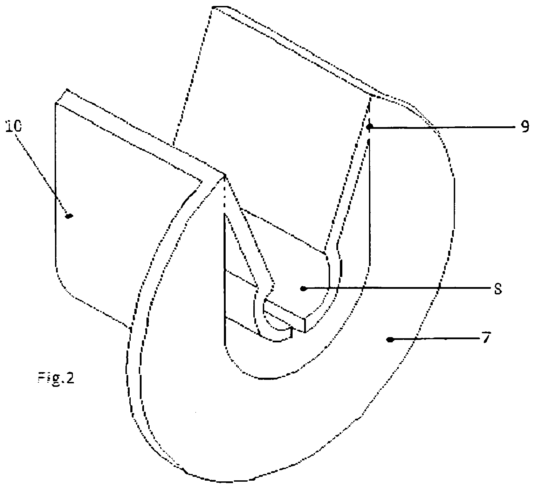

Figur 2 zeigt die Trägerform 3 von schräg unten mit Befestigungsklammer 8, sowie Trägerplatte 7 Sollbruchstelle 9 und Trägerwand 10.

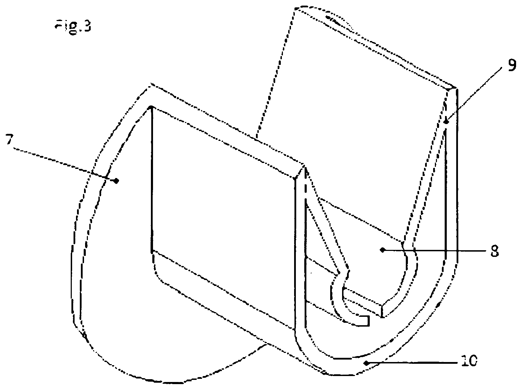

Figur 3 zeigt die Trägerform 3 von schräg oben mit Befestigungsklammer 8, sowie Trägerplatte 7, Sollbruchstelle 9 und Trägerwand 10.

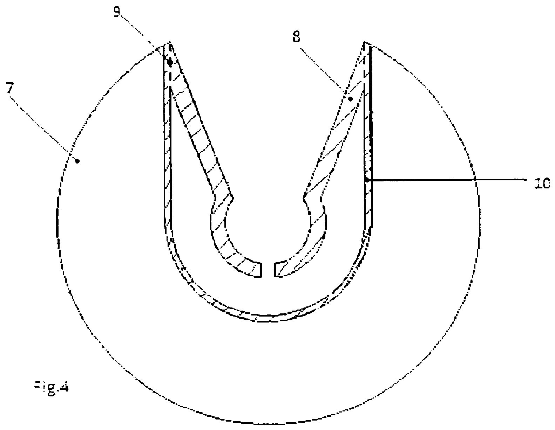

Fig. 4 zeigt die Trägerform 3 in Draufsicht mit Befestigunsklammer 8, sowie Trägerplatte 7, Sollbruchstelle 9 und Trägerwand 10.

## Patentansprüche

1. Trägerform (3) für Duft- und/oder Reinigungsmaterial (6) in Abflussstopfen ist **dadurch gekennzeichnet, dass** sie aus Kunststoff besteht, aus einer kreisförmigen Trägerplatte (7) mit ca. 30mm Durchmesser und ca. 1mm Dicke, mit einer Ausnehmung, auf der eine ca. 15mm hohe und ca. 1mm dicke U-förmige Trägerwand (10) angebracht ist, die auf der Innenseite zur Mitte führende elastische Befestigungsklammern (8) aufweist.

2. Trägerform (3) nach Anspruch 1 **dadurch gekennzeichnet, dass** die elastischen Befestigungsklammern (8) an den Verbindungsstellen zur Trägerwand (10) mit einer Sollbruchstelle (9) ausgestattet sind.

3. Trägerform (3) nach Anspruch 1 **dadurch gekennzeichnet, dass** das Duft-und/oder Reinigungsmaterial (6) im Kaltpressverfahren an die Trägerform (3) gepresst ist.
